(19) Europäisches Patentamt
European Patent Office
Office européen des brevets

(11) **EP 3 339 994 A1**

(12) **EUROPÄISCHE PATENTANMELDUNG**

(43) Veröffentlichungstag:
**27.06.2018 Patentblatt 2018/26**

(51) Int Cl.:
**G05B 19/418** *(2006.01)* **G05B 23/02** *(2006.01)*
**G05B 19/042** *(2006.01)*

(21) Anmeldenummer: **16205729.3**

(22) Anmeldetag: **21.12.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Falk, Rainer**
**85586 Poing (DE)**
• **Merli, Dominik**
**86609 Donauwörth (DE)**
• **Wimmer, Martin**
**85579 Neubiberg (DE)**

(54) **VERFAHREN ZUM ÜBERPRÜFEN EINER MANDANTENZUORDNUNG, COMPUTERPROGRAMMPRODUKT UND VORRICHTUNG**

(57) Ein Verfahren zur individuellen Mandantenzuordnung (Z) bzw. Zuordnung von Feldgeräten (FD1,FD2) zu Mandanten (T1), welche eine Person, ein weiteres Feldgerät oder eine Instanz eines Computerprogramms sein kann, mittels eines Backend bzw. eines Servers (100). Anhand der Zuordnungsinformationen (I1,I2) werden die Feldgerät-Daten (D1,D2), z.B. Eigenschaften, Parameter oder Kommunikationseigenschaften, an die Mandanten ggf. verschlüsselt oder kryptographisch geschützt, übermittelt. Zur Verwaltung eines Automatisierungssystemes (AS1,AS2) mit Feldgeräten können Attribute an die Feldgeräte und die Mandanten vergeben werden, z.B. Besitzer, Benutzer, Service-Techniker, Seriennummer, Softwareversion. Somit können Feldgeräte-Zuordnungen in dem Backend (100) überprüft werden. Hieraus resultiert eine Erhöhung der Vertrauenswürdigkeit und der Sicherheit für einen Betreiber eines Automatisierungssystems (AS1, AS2). Weiterhin werden ein Computerprogrammprodukt, eine Vorrichtung zum Überprüfen einer Mandantenzuordnung (Z) und ein Backend (100), z.B. ein Server vorgeschlagen.

FIG 1

EP 3 339 994 A1

**Beschreibung**

Die vorliegende Erfindung betrifft ein Verfahren zum Überprüfen einer Mandantenzuordnung, ein entsprechendes Computerprogrammprodukt, eine Vorrichtung zum Überprüfen einer Mandantenzuordnung und ein Backend mit einer solchen Vorrichtung.

Es sind Automatisierungssysteme bekannt, die eine Vielzahl an Feldgeräten wie beispielsweise Sensoren, Aktoren, Überwachungsgeräte, Roboter und dergleichen mehr umfassen, wobei beispielsweise auch verschiedene Abhängigkeiten zwischen verschiedenen Feldgeräten eines solchen Automatisierungssystems existieren können. Ferner kann es erwünscht sein, verschiedene Automatisierungssysteme, die zum Beispiel an verschiedenen Standorten auf der Erde aufgebaut sind, von einem zentralen Punkt aus, wie beispielsweise einer Firmenzentrale, überwachen und/oder steuern zu können. Der Aufwand, der für die Einrichtung einer solchen Überwachungs- und Steuerungszentrale mit den dafür benötigten Kommunikationsverbindungen nötig ist, als auch für das Betreiben eines solchen Netzwerks, kann insbesondere für kleinere oder mittelgroße Unternehmen eine nicht zu schaffende Aufgabe darstellen.

Aus diesem Grund haben sich verschiedene Dienstleistungsunternehmen gebildet, die derartige Dienste anbieten. Um den Kostenrahmen dabei überschaubar zu halten, werden dabei häufig einzelne Knotenpunkte oder Server dazu verwendet, die Kommunikation mit mehreren Automatisierungsnetzwerken zu verwalten. Die Automatisierungsnetzwerke können dabei insbesondere unterschiedlichen Mandanten gehören. Ein solches System wird beispielsweise Multi-Tenant-Backend genannt. In dem Multi-Tenant-Backend ist insbesondere für jedes darüber verwaltbare Feldgerät eine Zuordnungsinformation hinterlegt.

Die Zuordnungsinformation legt fest, welcher Mandant ein jeweiliges Feldgerät konfigurieren kann bzw. an welchen Mandanten die Daten, die von dem Feldgerät erfasst werden, gesendet werden.

Da die Mandantenzuordnung in dem Multi-Tenant-Backend verwaltet wird, ist es für einen Mandanten nicht jederzeit möglich, die Zuordnung der Feldgeräte zu einem Mandanten von in seinem Automatisierungssystem angeordneten Feldgeräten zu überprüfen. Hieraus ergibt sich ein Sicherheitsrisiko, da es möglich ist, dass ein Feldgerät Daten in unzulässiger Weise an Dritte überträgt, beispielsweise um eine aktuelle Produktion oder Auslastung auszuspähen.

Vor diesem Hintergrund besteht eine Aufgabe der vorliegenden Erfindung darin, eine Möglichkeit zu schaffen, die Zuordnung von Feldgeräten in einem Backend zu überprüfen.

Demgemäß wird ein Verfahren zum Überprüfen einer in einem Backend für eine Mehrzahl N von Mandanten verwalteten Mandantenzuordnung von in einem Automatisierungssystem angeordneten Feldgeräten vorgeschlagen, wobei ein jedes der Feldgeräte mindestens einem der N Mandanten zugeordnet ist und mittels des Backends von dem zugeordneten Mandanten verwaltbar ist. Das Verfahren umfasst die Schritte: Speichern einer Zuordnungsinformation für ein jedes der Feldgeräte in dem Backend, wobei die Zuordnungsinformation die Zuordnung des jeweiligen Feldgeräts zu dem Mandanten umfasst; Übermitteln von dem Feldgerät bereitgestellten Feldgerät-Daten an das Backend; und Überprüfen der in dem Backend gespeicherten Zuordnungsinformation des Feldgeräts in Abhängigkeit der übermittelten Feldgerät-Daten.

Dieses Verfahren ermöglicht es vorteilhaft, Feldgeräte-Zuordnungen in dem Backend zu überprüfen. Eine solche Überprüfung kann für einen Service-Anbieter, der beispielsweise das Backend betreibt, vorteilhaft sein, da dieser damit eine Qualität und eine Sicherheit der angebotenen Dienstleistung sicherstellen kann. Ferner kann ein Mandant beispielsweise Kriterien oder Prüfungsvorschriften vorgeben, die seine Feldgeräte zu erfüllen haben und die von dem vorgeschlagenen Verfahren geprüft werden. Hieraus ergibt sich insgesamt der Vorteil, dass die Vertrauenswürdigkeit und die Sicherheit für einen Betreiber eines Automatisierungssystems erhöht werden.

Ein Backend, das auch als "Multi-Tenant-Backend" bezeichnet wird, ist beispielsweise ein Server, der von einem Service-Anbieter bzw. einem Drittanbieter betrieben wird und der ein Verwalten einer Vielzahl von Feldgeräten, die insbesondere auch unterschiedlichen Mandanten zugeordnet sein können, bereitstellt. Das Backend kann auch als Cloud-Dienst bezeichnet werden. Das Backend ist insbesondere ein Server oder Computer mit einer Internet-Verbindung, wobei die Internet-Verbindung über ein kabelgebundenes Netzwerk wie ein LAN (Local Area Network) und/oder über ein Mobilfunknetzwerk wie zum Beispiel ein 3G-, ein 4G- und/oder ein 5G-Netzwerk, ein Wireless LAN, WiMax (Worldwide Interoperability for Microwave Access), Bluetooth, ZigBee, IEEE 802.15.4 Netzwerk oder einen anderen IoT-Funkstandard ("Internet of Things") wie SigFox oder LoRa (LoRaWAN) hergestellt werden kann. Über dieses Netzwerk oder diese Internet-Verbindung ist das Backend in der Lage, Daten sowohl mit den Feldgeräten als auch mit den Mandanten auszutauschen.

Ein System mit mehreren Automatisierungssystemen, wobei jedes der Automatisierungssysteme mehrere Feldgeräte aufweist und ein jedes der Feldgeräte von einem zentralen Backend verwaltbar ist, wird beispielsweise auch als "Internet of Things" oder "Industrial Internet of Things" bezeichnet.

Ein Automatisierungssystem kann insbesondere auch Feldgeräte umfassen, die nicht über das Backend verwaltbar sind, oder zumindest nicht direkt über das Backend verwaltbar sind. Beispielsweise kann vorgesehen sein, dass ein Feldgerät als eine Instanz eines übergeordneten Feldgeräts lediglich mittelbar über das übergeordnete Feldgerät verwaltbar ist oder das übergeordnete Feldgerät verwaltet das Feldgerät selbsttätig oder automatisch.

Ein Mandant ist insbesondere eine natürliche und/oder eine juristische Person. Ein Mandant kann auch ein weiteres Feldgerät und/oder eine Instanz eines Computerprogramms oder eines Steuerungsprogramms sein. Ein Mandant wird beispielsweise durch einen Identifier gekennzeichnet, wie eine Zeichenkette, eine URI (Unique Resource Identifier), eine URL (Unique Resource Location), eine Email-Adresse, einen öffentlichen Schlüssel und/oder eine Prüfsumme eines öffentlichen Schlüssels.

Das Automatisierungssystem ist beispielsweise eine industrielle Produktionsanlage, wie z.B. eine Fabrik. Das Automatisierungssystem kann auch als Automatisierungsnetzwerk bezeichnet werden. Das Automatisierungssystem umfasst insbesondere eine Mehrzahl an Feldgeräten, umfassend Sensoren, Produktionsgeräte, Steuergeräte, Überwachungseinheiten, wie beispielsweise eine Kamera und/oder ein Mikrofon, Roboter und/oder weitere Geräte, die zum Erfassen von Informationen eingerichtet sind und/oder die steuerbar sind. Durch Feldgeräte erfasste Informationen umfassen insbesondere visuelle Aufnahmen, Audioaufnahmen, Umgebungsparameter, Produktionsparameter und/oder weitere Parameterwerte, die das Automatisierungssystem betreffen. Verschiedene Feldgeräte in einem Automatisierungssystem können wechselseitig interagieren und zusammenwirken, um beispielsweise einen komplexen Produktionsprozess zu realisieren. Hierfür kann vorgesehen sein, dass die entsprechenden Feldgeräte miteinander kommunizieren und/oder Daten austauschen.

Die Informationen, die von den Feldgeräten in einem Automatisierungssystem erfasst werden, können sensible Informationen für ein Unternehmen sein. Beispielsweise können Informationen über Lagerbestände von Spezialteilen, die für eine Produktion benötigt werden, von einem Hersteller der Spezialteile dazu verwendet werden, den Preis für die Spezialteile zu erhöhen, wenn die Lagerbestände gering sind. Unternehmen haben daher ein Interesse daran, derartige Informationen nicht nach außen dringen zu lassen.

Die in dem Backend verwaltete Mandantenzuordnung umfasst insbesondere eine Zuordnungstabelle. Diese weist beispielsweise Einträge für ein jedes Feldgerät sowie dem Feldgerät zugeordnete Mandanten auf. Die Zuordnungstabelle ist damit insbesondere eine Auflistung der Zuordnungsinformationen. Die Zuordnungsinformation umfasst für ein jedes Feldgerät individuell zumindest einen zugeordneten Mandanten. Die Zuordnungsinformation für ein Feldgerät kann aber auch mehrere Mandantenzuordnungen aufweisen. Ferner kann die Zuordnungsinformation weitere Informationen, wie beispielsweise das Automatisierungssystem, in welchem ein jeweiliges Feldgerät angeordnet ist, aufweisen und/oder Mandantenattribute umfassen. Ein Mandantenattribut ist beispielsweise "Besitzer", "Operator", "Benutzer", "Service-Techniker" oder dergleichen mehr.

Die Feldgeräte sind insbesondere von dem oder den zugeordneten Mandanten mittels des Backends verwaltbar. Das Verwalten eines Feldgeräts umfasst insbesondere ein Auslesen von Daten, beispielsweise von erfassten Informationen des Automatisierungssystems, ein Konfigurieren des Feldgeräts, ein Steuern des Feldgeräts, ein Senden und/oder Empfangen von Daten an bzw. von dem Feldgerät. Feldgeräte, die Informationen über das Automatisierungssystem erfassen, können beispielsweise so konfiguriert sein, dass sie kontinuierlich oder in vorgegebenen Zeitintervallen oder bei bestimmten Ereignissen, wie beispielsweise einem Über- oder Unterschreiten eines Schwellwerts für einen Parameter, Daten über das Backend an den oder die zugeordneten Mandanten übermitteln. Dabei kann auch vorgesehen sein, dass bestimmte Daten nur an Mandanten, die ein bestimmtes Mandantenattribut aufweisen, übermittelt werden. Ferner kann vorgesehen sein, dass die erfassten Information auf dem Feldgerät zwischengespeichert werden und nur auf Anfrage seitens des Mandanten übermittelt werden. Steuerbare Feldgeräte, wie beispielsweise Produktionsgeräte, wie eine CNC-Fräse oder ein 3D-Drucker, können insbesondere über das Backend steuerbar sein. Hierfür kann vorgesehen sein, dass ein Konstruktionsplan für ein Bauteil, das die CNC-Fräse oder der 3D-Drucker produzieren soll, mittels des Backends von dem Mandanten an die CNC-Fräse oder den 3D-Drucker übermittelt wird.

Das Speichern der Zuordnungsinformation für ein jedes der Feldgeräte in der Mandantenzuordnung in dem Backend erfolgt beispielsweise auf einer dem Backend zugeordneten Speichereinheit, wie beispielsweise eine Festplatte. Andere Speichermedien, wie beispielsweise ein USB-Stick, ein ROM, ein RAM usw. sind ebenfalls denkbar. Ein Ändern einer Zuordnungsinformation kann beispielsweise nur von dem Service-Anbieter des Backends durchgeführt werden.

Das Übermitteln der Feldgerät-Daten von einem jeweiligen Feldgerät an das Backend erfolgt insbesondere mittels eines Datennetzwerks. Beispielsweise erfolgt das Übermitteln als eine Datenübertragung in einem kabelgebundenen Netzwerk und/oder in einem Mobilfunknetzwerk.

Das Überprüfen der in dem Backend gespeicherten Zuordnungsinformation des Feldgeräts in Abhängigkeit der übermittelten Feldgerät-Daten umfasst beispielsweise ein Auswerten der übermittelten Feldgerät-Daten mittels einer hierfür eingerichteten Einheit, wie einer Recheneinheit oder Steuerungseinheit. Die jeweilige Einheit kann hardwaretechnisch und/oder auch softwaretechnisch implementiert sein. Bei einer hardwaretechnischen Implementierung kann die jeweilige Einheit als eine Überprüfungsvorrichtung oder als Teil des Backends, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die von dem Feldgerät übertragenen Feldgerät-Daten kann man auch als Metainformationen des Feldgeräts bezeichnen. Insbesondere kann eine statistische Analyse von Feldgerät-Daten und/oder Datensätzen von mehreren Feldgeräten vorgenommen werden. Beispielsweise kann ein vorgegebenes Ensemble von Feldgeräten im Hinblick auf eine darauf installierte Softwareversion überprüft werden, wobei eine Abweichung eines oder mehrerer Feldgeräte von einer Softwareversion, die auf der Mehrheit der Feldgeräte des Ensembles installiert ist, leicht entdeckt werden. Dies kann dann beispielsweise ein Hinweis darauf sein, dass das Gerät einem falschen Mandanten zugeordnet ist. Die Metainformationen eines solchen Ensembles können damit auf Auffälligkeiten, wie Ausreißer, überprüft werden. Ferner können auch Feldgerät-Daten, die unterschiedlichen Mandanten zugeordnet sind, in einem Quervergleich überprüft werden.

Gemäß einer Ausführungsform erfolgt das Übermitteln der Feldgerät-Daten über ein drahtgebundenes Datennetzwerk und/oder über ein Mobilfunknetzwerk.

In dieser Ausführungsform wird vorteilhaft ein bereits vorhandenes Datennetzwerk zur Übermittlung der Feldgerät-Daten verwendet. Dies erleichtert eine Implementierung des Verfahrens.

Gemäß einer weiteren Ausführungsform weist zumindest eines der Feldgeräte eine dem Feldgerät zugeordnete Kommunikationseinrichtung auf, die zum Aufbau einer dedizierten Kommunikationsverbindung mit dem Backend eingerichtet ist.

Eine solche Kommunikationseinrichtung ist beispielsweise als ein Modem, insbesondere ein Mobilfunkmodem, ausgebildet. Die Kommunikationsverbindung kann dabei beispielsweise über ein 3G-, 4G- und/oder 5G-Mobilfunknetzwerk, ein Wireless LAN, WiMax, Bluetooth, ZigBee, IEEE 802.15.4 Netzwerk oder einen anderen IoT-Funkstandard wie SigFox oder LoRa aufgebaut werden. Vorteilhaft ist die Kommunikationseinrichtung auch zum Übermitteln der Feldgerät-Daten eingerichtet.

In dieser Ausführungsform kann das jeweilige Feldgerät daher unabhängig von einem zentralen Gateway, wie beispielsweise einem Sicherheitsserver eines Automatisierungssystems, der den ein- und ausgehenden Datenverkehr überwacht, Daten mit dem Backend austauschen.

Diese Ausführungsform ermöglicht einerseits eine sehr flexible Ausprägung eines Automationssystems, da auf eine Einbindung des jeweiligen Feldgeräts in ein kabelgebundenes Netzwerk und den damit verbundenen Beschränkungen verzichtet werden kann. Andererseits ergibt sich hierbei die Möglichkeit für einen Angreifer, ein Spionage-Feldgerät in ein Automationssystem einzubringen, um dieses auszuspionieren. Durch das Überprüfen der Feldgerät-Daten in dem Backend lässt sich eine solche Gefahr reduzieren.

Gemäß einer weiteren Ausführungsform umfasst das Überprüfen der Zuordnungsinformation ein Analysieren der Feldgerät-Daten in Abhängigkeit der den Feldgeräten zugeordneten Mandanten.

Beispielsweise verwendet ein Mandant nur Feldgeräte, die von einem bestimmten Hersteller stammen. Dann lässt sich anhand einer Hersteller-ID, die von den Feldgeräten mit den Feldgerät-Daten an das Backend übermittelt wird, einfach überprüfen, ob ein Feldgerät fälschlicherweise diesem Mandanten zugeordnet ist, weil es eine unterschiedliche Hersteller-ID aufweist.

Ein weiteres Beispiel ist, dass die Feldgeräte eine Standortinformation mit den Feldgerät-Daten an das Backend übermitteln. Dabei können Mandanten beispielsweise vorgeben, dass in einem vorgegebenen Gebiet um ihr Automatisierungssystem ausschließlich Feldgeräte, die ihnen zugewiesen sind, betrieben werden dürfen. Wenn ein Feldgerät eines dritten Mandanten in ein solches Gebiet fällt, was sich anhand der Standortinformation leicht ermitteln lässt, kann beispielsweise die Datenkommunikation dieses Feldgeräts mit dem dritten Mandanten unterbrochen werden.

Gemäß einer weiteren Ausführungsform umfasst das Verfahren den Schritt: Durchführen einer vorgegebenen Aktion in Abhängigkeit eines Ergebnisses des Überprüfens der in dem Backend gespeicherten Zuordnungsinformation des Feldgeräts in Abhängigkeit der übermittelten Feldgerät-Daten.

Beispiele für die vorgegebene Aktion umfassen: Auslösen eines Alarms, Senden einer Push-Nachricht an eine dafür eingerichtete Einheit, wie beispielsweise einen Pager und/oder ein Mobiltelefon, Löschen der Konfiguration des entsprechenden Feldgeräts, Ausschalten des entsprechenden Feldgeräts und/oder Unterbrechen einer Kommunikationsverbindung des Feldgeräts mit dem diesem zugeordneten Mandanten.

Gemäß einer weiteren Ausführungsform umfasst das Verfahren den Schritt: Dynamisches Anpassen der Zuordnungsinformation eines Feldgeräts in Abhängigkeit eines Ergebnisses des Überprüfens der in dem Backend gespeicherten Zuordnungsinformation des Feldgeräts in Abhängigkeit der übermittelten Feldgerät-Daten.

In dieser Ausführungsform ist es somit möglich, die Zuordnung von Feldgeräten dynamisch zu verändern. Damit lassen sich zum Beispiel Beschränkungen für zulässige Zuordnungen durchsetzen. So ist denkbar, dass in einem vorgebbaren Gebiet, wie beispielsweise einem Firmenareal, einem Behördengebäude und/oder einer militärischen Zone Feldgeräte nur einem vorgegebenen Mandanten, nur Mandanten mit einer speziellen Freigabe und/oder grundsätzlich keinem Mandanten zuordenbar sind.

Dieses Konzept ist auf weitere Kriterien ausweitbar. Beispielsweise kann ein Hersteller von Feldgeräten vorgeben, dass nur Feldgeräte mit bestimmten Softwareversionen einem "Nutzer"-Mandanten zuordenbar sind. Damit lässt sich beispielsweise verhindern, dass Software, die noch in der Entwicklung ist, nach außen gelangt und/oder dass unfertige Software, die möglicherweise ein Sicherheitsrisiko darstellt, wie es bei Betriebssoftware für Fahrzeuge der Fall sein kann, außerhalb von experimentellen Umgebungen zum Einsatz kommt oder von ungeschultem Personal verwendet wird.

Gemäß einer weiteren Ausführungsform umfassen die Feldgerät-Daten eine Feldgerät-Eigenschaft, einen Erfassungsparameter des Feldgeräts und/oder eine Eigenschaft einer Kommunikationsverbindung des Feldgeräts mit dem Backend.

Gemäß einer weiteren Ausführungsform umfasst die Feldgerät-Eigenschaft eine Feldgerät-Seriennummer, eine Feldgerät-Herstellerinformation, eine Feldgerät-Softwareversion, eine Feldgerät-Hardwareversion, einen Feldgeräte-Standort und/oder einen zeitlichen Verlauf einer Feldgerät-Eigenschaft und/oder einen zeitlichen Verlauf von Feldgerät-Verwaltungsaktionen.

Eine Feldgerät-Verwaltungsaktion ist beispielsweise jede Kommunikation des dem jeweiligen Feldgerät zugeordneten Mandanten mit dem Feldgerät. Hierunter fällt beispielsweise ein Abrufen von Daten oder ein Vornehmen einer Steuerungsoperation.

Gemäß einer weiteren Ausführungsform umfassen die Erfassungsparameter des Feldgeräts eine Umgebungstemperatur, einen Umgebungsluftdruck, eine Umgebungsluftfeuchtigkeit, einen Umgebungsschallpegel, eine Umgebungshelligkeit, eine Umgebungsluftzusammensetzung, einen Parameter einer Produktionsmaschine wie z.B. eine Temperatur, einen Druck, eine Magnetflussinformation und/oder eine Schwingungs- bzw. Vibrationsinformation, und/oder einen zeitlichen Verlauf eines Erfassungsparameters.

Insbesondere aus einem zeitlichen Verlauf der Feldgerät-Daten kann auf Veränderungen, wie Manipulationen oder Beschädigungen, eines Feldgeräts geschlossen werden.

Gemäß einer weiteren Ausführungsform übertragen die Feldgeräte nur dann Feldgerät-Daten an das Backend, wenn eine Zustandsänderung wie beispielsweise eine Änderung eines Parameterwerts von dem Feldgerät festgestellt wird. In dieser Ausführungsform wird eine Bandbreite des Datennetzwerks nicht durch redundante Daten belastet.

Gemäß einer weiteren Ausführungsform umfasst die Eigenschaft der Kommunikationsverbindung eine Routing-Information, ein Kommunikationsprotokoll, eine kryptografische Information und/oder einen zeitlichen Verlauf der Eigenschaft der Kommunikationsverbindung.

Eine Routing-Information umfasst insbesondere Informationen darüber, über welche Netzwerk-Knoten und/oder Server ein Datenpaket geleitet wurde.

Gemäß einer weiteren Ausführungsform ist die Zuordnungsinformation und/oder die Mandantenzuordnung kryptografisch geschützt gespeichert und/oder wird kryptografisch geschützt übermittelt und/oder wird kryptografisch geschützt verifiziert.

Beispielsweise ist die Mandantenzuordnung und/oder die Zuordnungsinformation durch eine kryptographische Prüfsumme geschützt. Die Prüfsumme kann dabei dem Feldgerät und/oder dem Backend zugeordnet sein. Eine kryptographische Prüfsumme ist insbesondere eine digitale Signatur und/oder ein Nachrichten-Authentisierungscode (Message Authentication Code). Mit dieser Ausführungsform kann sichergestellt werden, dass eine unbefugte Änderung der Zuordnungsinformation und/oder der Mandantenzuordnung nicht möglich ist. Ferner kann sichergestellt werden, dass eine an ein Feldgerät übermittelte Zuordnungsinformation tatsächlich von dem Backend übermittelt wurde.

Gemäß einer weiteren Ausführungsform werden die Feldgerät-Daten kryptographisch geschützt an das Backend übermittelt.

In dieser Ausführungsform ist sichergestellt, dass die übermittelten Feldgerät-Daten korrekt sind. Damit kann verhindert werden, dass ein Angreifer beispielsweise dem Backend falsche Feldgerät-Daten übermittelt, so dass beim Überprüfen der Feldgerät-Daten keine Auffälligkeiten gefunden werden. Der kryptographische Schutz kann wie zuvor erläutert erreicht werden.

Eine weitere Ausführungsform des Verfahrens ist dadurch gekennzeichnet, dass die Zuordnungsinformation ferner eine Mandanteneigenschaft umfasst.

Eine Mandanteneigenschaft ist beispielsweise ein Attribut, wie "Eigentümer", "Operator", "Benutzer", "Sicherheitsbeauftragter" und/oder "Service-Techniker". In dieser Ausführungsform ist es möglich, dass eine komplexere Kontrolle des Feldgeräts erfolgt. Beispielsweise kann vorgesehen sein, dass sicherheitsrelevante Informationen, wie Softwarestände, Routing-Informationen einer Kommunikationsverbindung und/oder die Zuordnungsinformation, selbst von dem Feldgerät nur an einen Sicherheitsserver gesendet werden. Beispielsweise ein Operator kann hingegen Produktionspläne an ein Feldgerät übermitteln, ohne Zugriff auf weitere Informationen des Feldgeräts zu haben.

Gemäß einem zweiten Aspekt wird ein Computerprogrammprodukt vorgeschlagen, welches auf einer programmgesteuerten Einrichtung die Durchführung des wie oben erläuterten Verfahrens gemäß dem ersten Aspekt oder einer der Ausführungsformen des ersten Aspekts veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird eine Vorrichtung zum Überprüfen einer in einem Backend für eine Mehrzahl N von Mandanten verwalteten Mandantenzuordnung vorgeschlagen. Die Mandantenzuordnung umfasst eine Zuordnungsinformation von in einem Automatisierungssystem angeordneten Feldgeräten, wobei ein jedes der Feldgeräte einem der N Mandanten zugeordnet ist und mittels des Backends von dem zugeordneten Mandanten verwaltbar ist. Die Vorrichtung weist eine Speichereinheit zum Speichern der Mandantenzuordnung mit den Zuordnungsinformationen auf, wobei die Zuordnungsinformation die Zuordnung eines jeweiligen Feldgeräts zu dem Mandanten umfasst, eine Empfangseinheit zum Empfangen von von den Feldgeräten bereitgestellten Feldgerät-Daten, und eine Überprüfungseinheit zum Überprüfen der in der Speichereinheit gespeicherten Zuordnungsinformation in Abhängigkeit der empfangenen Feldgerät-Daten.

Die vorgeschlagene Vorrichtung kann als eine Recheneinheit oder Steuerungseinheit ausgebildet sein. Sie kann hardwaretechnisch und/oder auch softwaretechnisch implementiert sein. Bei einer hardwaretechnischen Implementierung kann die jeweilige Einheit als eigenständige Vorrichtung oder als Teil einer Vorrichtung, wie beispielsweise eines Backends ausgebildet sein. Zum Beispiel ist die Vorrichtung als Computer oder als Mikroprozessor ausgebildet. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die vorgeschlagene Vorrichtung eignet sich insbesondere, mittels des Verfahrens gemäß dem ersten Aspekt oder einer der Ausführungsformen des ersten Aspekts betrieben zu werden oder dieses auszuführen.

Gemäß einem vierten Aspekt wird ein Backend mit einer Vorrichtung zum Überprüfen einer in dem Backend verwalteten Mandantenzuordnung vorgeschlagen. Die Mandantenzuordnung umfasst eine Zuordnungsinformation von in einem Automatisierungssystem angeordneten Feldgeräten.

Das Backend ist beispielsweise als ein Server ausgebildet. Die Vorrichtung zum Überprüfen ist insbesondere wie die Vorrichtung gemäß dem dritten Aspekt ausgebildet.

Gemäß einem fünften Aspekt wird ein Verfahren zum Überprüfen einer in einem Backend für eine Mehrzahl N von Mandanten verwalteten Mandantenzuordnung von in einem Automatisierungssystem angeordneten Feldgeräten vorgeschlagen. Ein jedes der Feldgeräte ist einem der N Mandanten zugeordnet und ist mittels des Backends von dem zugeordneten Mandanten verwaltbar. Das Verfahren umfasst die Schritte: Speichern einer Zuordnungsinformation für ein jedes der Feldgeräte in dem Backend, wobei die Zuordnungsinformation die Zuordnung des jeweiligen Feldgeräts zu dem Mandanten umfasst; Übermitteln der Zuordnungsinformation an eine dem Automatisierungssystem zugeordnete Empfangseinheit; und Bereitstellen der übermittelten Zuordnungsinformation durch die Empfangseinheit in dem Automatisierungssystem.

Das Verfahren gemäß dem fünften Aspekt ist insbesondere mit dem Verfahren gemäß dem ersten Aspekt oder einer der Ausführungsformen kombinierbar und gemeinsam durchführbar.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1      zeigt ein schematisches Blockschaltbild eines Ausführungsbeispiels eines Systems mit zwei Automatisierungssystemen;

Fig. 2      zeigt ein schematisches Blockschaltbild eines Ausführungsbeispiels eines Systems mit einem Automatisierungssystem;

Fig. 3a      zeigt ein schematisches Blockschaltbild eines Ausführungsbeispiels von in Mitteleuropa verteilten Feldgeräten;

Fig. 3b      zeigt ein Ausführungsbeispiel einer Zuordnungstabelle mit korrelierten Feldgerät-Daten; und

Fig. 4      zeigt schematisch ein Ausführungsbeispiel eines Verfahrensablaufs.

In den Figuren sind gleiche oder funktionsgleiche Elemente mit denselben Bezugszeichen versehen worden, sofern nichts anderes angegeben ist.

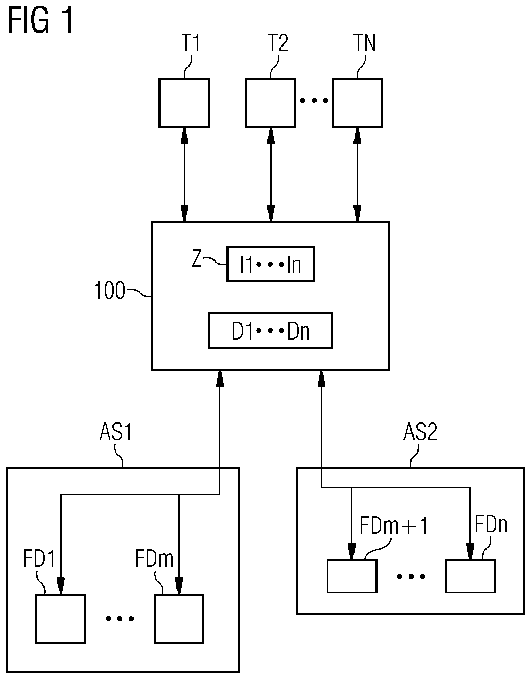

Fig. 1 zeigt ein schematisches Blockschaltbild eines Ausführungsbeispiels eines Systems mit einem ersten Automatisierungssystem AS1 umfassend Feldgeräte FD1 - FDm und einem zweiten Automatisierungssystem AS2 umfassend Feldgeräte FDm+1 - FDn. Die Feldgeräte FD1 - FDn sind über ein Backend 100 von den ihnen zugeordneten Mandanten T1, T2 - TN verwaltbar. Hierfür verwaltet das Backend 100 eine Mandantenzuordnung Z mit Zuordnungsinformationen I1 - In. Jede Zuordnungsinformation I1 - In weist einem jeweiligen Feldgerät FD1 - FDn zumindest einen Mandanten T1, T2 - TN aus der Mehrzahl von N Mandanten zu. Die Mandantenzuordnung Z ist dazu beispielsweise als eine Tabelle ausgebildet. Nur derjenige Mandant T1, T2 - TN, der einem bestimmten Feldgerät FD1 - FDn zugeordnet ist kann beispielsweise Daten mit dem bestimmten Feldgerät FD1 - FDn austauschen und/oder auf das bestimmte Feldgerät FD1 - FDn zugreifen.

Die Feldgeräte FD1 - FDn übermitteln Feldgerät-Daten D1 - Dn an das Backend 100. Das Backend 100 ist dazu eingerichtet, mittels den empfangenen Feldgerät-Daten D1 - Dn die Zuordnungsinformationen I1 - In der Feldgeräte FD1 - FDn, die in der Mandantenzuordnung Z gespeichert sind, zu überprüfen.

Ein Beispiel ist, dass ein Mandant T1 regelmäßig einmal wöchentlich seine Feldgeräte FD1 - FDn aktualisiert, indem er beispielsweise eine aktualisierte Firmware aufspielt. Das Backend 100 kann dann die Firmware-Versionsstände der Feldgeräte FD1 - FDn vergleichen. Falls dem Mandant T1 ein Feldgerät FD1 - FDn zugeordnet ist, dessen Firmware nicht dem Versionsstand der weiteren Feldgeräte FD1 - FDn entspricht, ist dies ein starker Hinweis darauf, dass eine Fehlzuordnung vorliegt.

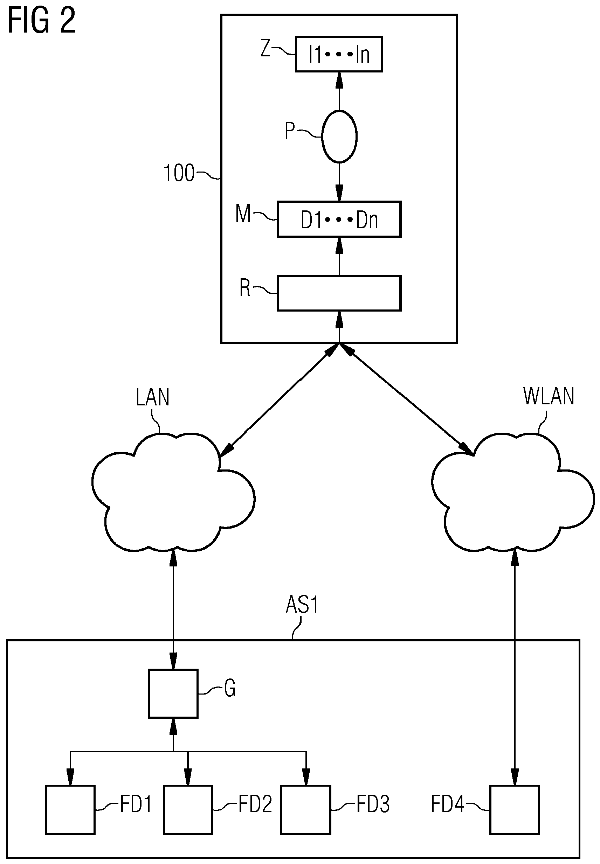

Fig. 2 zeigt ein schematisches Blockschaltbild eines Ausführungsbeispiels eines Systems mit einem Automatisierungssystem AS1 mit vier Feldgeräten FD1, FD2, FD3, FD4. Das Automatisierungssystem AS1 weist ferner ein Gateway G auf, welches über eine Kommunikationsverbindung über ein kabelgebundenes Datennetzwerk LAN mit einem Backend 100 verbunden ist und eine Datenkommunikation der Feldgeräte FD1, FD2, FD3 sicherstellt. Das Feldgerät FD4 weist ein nicht dargestelltes Mobilfunkmodem auf, weshalb es unabhängig von dem Gateway G eine Kommunikationsverbindung über ein Mobilfunknetzwerk WLAN mit dem Backend 100 herstellen kann.

Das Backend 100 weist eine Empfangseinheit R auf, die sowohl mit dem kabelgebundenen Datennetzwerk LAN als auch mit dem Mobilfunknetzwerk WLAN Daten austauschen kann. Insbesondere empfängt die Empfangseinheit R von den Feldgeräten FD1, FD2, FD3 FD4 übermittelte Feldgerät-Daten D1 - Dn und legt diese in einer Speichereinheit M ab. Die Speichereinheit M ist beispielsweise als eine Festplatte ausgebildet. Ferner weist das Backend 100 eine Überprüfungseinheit P auf, die vorliegend als ein Prozessor ausgebildet ist. Der Prozessor P hat Zugriff sowohl auf die in der Speichereinheit M gespeicherten Feldgerät-Daten D1 - Dn als auch auf die in der Mandantenzuordnung Z hinterlegten Zuordnungsinformationen I1 - In.

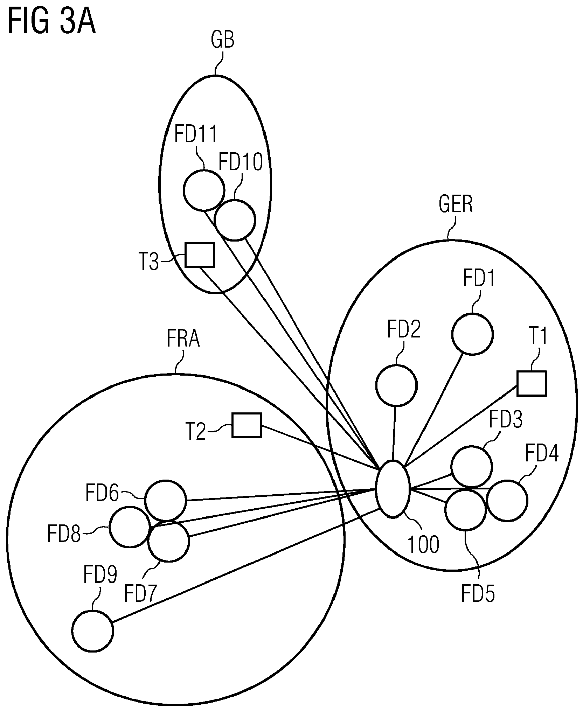

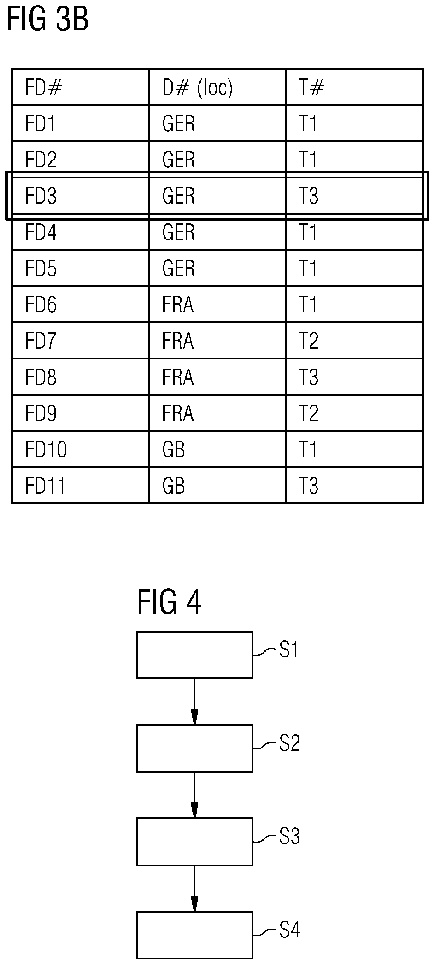

Der Prozessor P ist dazu eingerichtet, die Zuordnungsinformationen I1 - In mittels einer Analyse der Feldgerät-Daten D1-Dn zu überprüfen. Man kann auch sagen, der Prozessor verifiziert oder plausibilisiert die Zuordnungsinformationen I1-In. Hierfür wendet der Prozessor P beispielsweise statistische Methoden auf die Feldgerät-Daten D1 - Dn an. Ferner können feste Regeln oder Bedingungen vorgegeben werden, wie beispielsweise die Regel, dass alle Feldgeräte FD1 - FDn, die in einem bestimmten Gebiet angeordnet sind, nur genau einem vorgegebenen Mandanten T1 - TN zugeordnet sein dürfen. Dies lässt sich mittels einer Standortinformation D# (loc) (siehe Fig. 3b) der Feldgeräte FD1 - FDn überprüfen. Ein Beispiel hierfür wird nachfolgend anhand der Fig. 3a, 3b erläutert.

Fig. 3a zeigt ein schematisches Blockschaltbild eines Ausführungsbeispiels von in Mitteleuropa verteilten Feldgeräten FD1 - FD11. Aus Gründen der Übersicht wurde auf eine Darstellung von Automatisierungssystemen verzichtet. Beispielsweise handelt es sich dabei um industrielle Produktionsanlagen, die verschiedenen Unternehmen gehören. Alle Feldgeräte FD1 - FD11 sind über ein zentrales Backend 100 verwaltbar, insbesondere steuerbar. Der Betreiber des Backends 100 verwaltet die Feldgeräte FD1 - FD11 von drei Mandanten T1, T2, T3. In diesem Beispiel weist ein jedes der Feldgeräte FD1 - FD11 eine eigene Kommunikationseinrichtung auf, um eine Datenverbindung mit dem Backend 100 herzustellen.

Die Feldgeräte FD1 - FD6 und FD10 stehen dabei in Produktionsanlagen eines ersten Unternehmens. Das erste Unternehmen entspricht dem Mandanten T1. Die Feldgeräte FD7 und FD9 stehen in Produktionsanlagen eines zweiten Unternehmens, das dem Mandanten T2 entspricht. Die Feldgeräte FD8 und FD11 stehen in Produktionsanlagen eines dritten Unternehmens, das dem Mandanten T3 entspricht. Alle Feldgeräte eines jeweiligen Unternehmens sind zu einem Automatisierungssystem zusammengefasst.

Gemäß diesem Szenario ist eine Regel, dass alle Feldgeräte FD1 - FD6, die in Deutschland GER stehen, dem ersten Unternehmen gehören und demnach dem Mandanten T1 zugeordnet sein sollen. Diese Regel lässt sich beispielsweise als Bedingung 1 wie folgt formulieren:

$$\text{Alle FD\# mit D\# (loc)} \equiv \text{GER} \rightarrow \text{T1} \quad \text{(Bedingung 1)}$$

Das Backend 100 empfängt von jedem Feldgerät FD1 - FD11 Feldgerät-Daten D1 - D11, die vorliegend insbesondere eine Standortinformation D# (loc) umfassen. Gemäß dieser Regel müssen alle Feldgeräte FD#, deren Standort Deutschland GER ist, dem Mandanten T1 zugeordnet sein.

Die Fig. 3b zeigt ein Ausführungsbeispiel einer Zuordnungstabelle mit entsprechenden Standortinformationen D# (loc). Die erste Spalte FD# der Tabelle weist eine jeweilige Feldgerät-Nummer auf. Die zweite Spalte zeigt eine Standortinformation D# (loc) eines jeweiligen Feldgeräts FD1 - FD11. Die dritte Spalte entstammt der Mandantenzuordnung Z und weist die Zuordnungsinformation I1 - In eines jeweiligen Feldgeräts FD1 - FD11 auf.

Wie sofort erkannt wird, erfüllt das Feldgerät FD3 die aufgestellte Regel nach Bedingung 1 nicht. Demnach ist das Feldgerät FD3 dem falschen Mandanten T3 zugeordnet. Aufgrund dieser falschen Zuordnung ist der Mandant T3 in der Lage, das Feldgerät FD3 zu verwalten und so beispielsweise Informationen über einen Produktionszustand der Produktionsanlage des ersten Unternehmens ausspähen.

In diesem Fall ist beispielsweise vorgesehen, dass eine Zulässigkeitsanfrage an das erste Unternehmen gesendet wird, um zu ermitteln, ob das Feldgerät FD3 möglicherweise absichtlich dem Mandanten T3 zugeordnet ist. Weiterhin wird vorzugsweise eine temporäre Sperre des Feldgeräts FD3 veranlasst, so dass das Feldgerät FD3 temporär nicht mehr verwaltbar ist, bis die Sachlage aufgeklärt ist.

Neben dem geschilderten Beispiel mit der Standortinformation D# (loc) sind weitere Prüfkriterien denkbar. So können beispielsweise Geräteherstellerinformationen, Geräteversionen, Firmwareversionen, Softwareversionen, Protokolle, eine Häufigkeit von Verwaltungsvorgängen, verschiedene Umgebungseigenschaften wie Temperatur, Luftdruck, Schallpegel, Routing-Informationen und/oder weitere derartige Systemparameter analysiert und überprüft werden.

Fig. 4 zeigt schematisch ein Ausführungsbeispiel eines Verfahrens zum Überprüfen einer in einem Backend 100 für eine Mehrzahl N von Mandanten T1 - TN verwalteten Mandantenzuordnung Z von in einem Automatisierungssystem AS1, AS2 angeordneten Feldgeräten FD1 - FDn, wobei ein jedes der Feldgeräte FD1 - FDn einem der N Mandanten T1 - TN zugeordnet ist und mittels des Backends 100 von dem zugeordneten Mandanten T1 - TN verwaltbar ist. Das Verfahren ist beispielsweise mit einem System gemäß einem der Ausführungsbeispiele der Fig. 1 - 3 ausführbar.

Im ersten Verfahrensschritt erfolgt ein Speichern S1 einer Zuordnungsinformation I1 - In für ein jedes der Feldgeräte FD1 - FDn in dem Backend 100, wobei die Zuordnungsinformation I1 - In die Zuordnung des jeweiligen Feldgeräts FD1 - FDn zu dem Mandanten T1 - TN umfasst. Das Speichern S1 wird beispielsweise auf einer Speichereinrichtung S (siehe Fig. 2) ausgeführt.

Im zweiten Verfahrensschritt erfolgt ein Übermitteln S2 von von dem Feldgerät FD1 - FDn bereitgestellten Feldgerät-Daten D1 - Dn an das Backend 100. Beispielsweise weisen die Feldgeräte FD1 - FDn hierfür eine Kommunikationseinrichtung auf, die über ein Mobilfunknetzwerk WLAN mit dem Backend 100 Daten austauschen kann.

Im dritten Verfahrensschritt erfolgt ein Überprüfen S3 der in dem Backend 100 gespeicherten Zuordnungsinformation I1 - In des Feldgeräts FD1 - FDn in Abhängigkeit der übermittelten Feldgerät-Daten D1 - Dn. Hierfür weist das Backend 100 beispielsweise einen entsprechend eingerichteten Prozessor P (siehe Fig. 2) auf. Zum Beispiel werden Standortinformationen D# (loc) (siehe Fig. 3b) der Feldgeräte FD1 - FDn überprüft.

Im vierten Verfahrensschritt erfolgt ein Durchführen S4 einer Aktion in Abhängigkeit eines Ergebnisses des Überprüfens der in dem Backend 100 gespeicherten Zuordnungsinformation I1 - In. Zum Beispiel ist das Ergebnis für eines der Feldgeräte, dass sich dieses in einem Sperrgebiet befindet. Es wird dann Sicherheitspersonal alarmiert und dem betroffenen Feldgerät wird die Zuordnung entzogen. Das Feldgerät ist dann beispielsweise keinem Mandanten zugeordnet. Sobald das Feldgerät das Sperrgebiet wieder verlässt, wird die ursprüngliche Zuordnung wieder hergestellt.

Obwohl die vorliegende Erfindung anhand von Ausführungsbeispielen beschrieben wurde, ist sie vielfältig modifizierbar.

**Patentansprüche**

1.  Verfahren zum Überprüfen einer in einem Backend (100) für eine Mehrzahl N von Mandanten (T1,...,TN) verwalteten Mandantenzuordnung (Z) von in einem Automatisierungssystem (AS1, AS2) angeordneten Feldgeräten (FD1,...,FDn), wobei ein jedes der Feldgeräte (FD1,...,FDn) mindestens einem der N Mandanten (T1,...,TN) zugeordnet ist und mittels des Backends (100) von dem zugeordneten Mandanten (T1,...,TN) verwaltbar ist, mit:

    Speichern (S1) einer Zuordnungsinformation (I1,...,In) für ein jedes der Feldgeräte (FD1,...,FDn) in dem Backend (100), wobei die Zuordnungsinformation (I1,...,In) die Zuordnung des jeweiligen Feldgeräts (FD1,...,FDn) zu dem Mandanten (T1,...,TN) umfasst,
    Übermitteln (S2) von von dem Feldgerät (FD1,...,FDn) bereitgestellten Feldgerät-Daten (D1,...,Dn) an das Backend (100), und
    Überprüfen (S3) der in dem Backend (100) gespeicherten Zuordnungsinformation (I1,...,In) des Feldgeräts (FD1,...,FDn) in Abhängigkeit der übermittelten Feldgerät-Daten (D1, ... , Dn).

2.  Verfahren nach Anspruch 1,
    **dadurch gekennzeichnet,**

**dass** das Übermitteln (S2) der Feldgerät-Daten (D1,...,Dn) über ein drahtgebundenes Datennetzwerk (LAN) und/oder über ein Mobilfunknetzwerk (WLAN) erfolgt.

3. Verfahren nach Anspruch 1 oder 2,
   **dadurch gekennzeichnet,**
   **dass** zumindest eines der Feldgeräte (FD1,...,FDn) eine dem Feldgerät (FD1,...,FDn) zugeordnete Kommunikationseinrichtung aufweist, die zum Aufbau einer dedizierten Kommunikationsverbindung mit dem Backend (100) eingerichtet ist.

4. Verfahren nach einem der Ansprüche 1 bis 3,
   **dadurch gekennzeichnet,**
   **dass** das Überprüfen (S3) der Zuordnungsinformation (I1,...,In) ein Analysieren (S4) der Feldgerät-Daten (D1,...,Dn) in Abhängigkeit der den Feldgeräten (FD1,...,FDn) zugeordneten Mandanten (T1,...,TN) umfasst.

5. Verfahren nach einem der Ansprüche 1 bis 4, **gekennzeichnet durch**:

   Durchführen (S4) einer vorgegebenen Aktion (A1,...,Ak) in Abhängigkeit eines Ergebnisses des Überprüfens (S3) der in dem Backend (100) gespeicherten Zuordnungsinformation (I1,...,In) des Feldgeräts (FD1,...,FDn) in Abhängigkeit der übermittelten Feldgerät-Daten (D1,...,Dn).

6. Verfahren nach einem der Ansprüche 1 bis 5,
   **dadurch gekennzeichnet,**
   **dass** die Feldgerät-Daten (D1,...,Dn) eine Feldgerät-Eigenschaft, einen Erfassungsparameter des Feldgeräts (FD1,...,FDn) und/oder eine Eigenschaft einer Kommunikationsverbindung des Feldgeräts (FD1,...,FDn) mit dem Backend (100) umfassen.

7. Verfahren nach Anspruch 6,
   **dadurch gekennzeichnet,**
   **dass** die Feldgerät-Eigenschaft eine Feldgerät-Seriennummer, eine Feldgerät-Herstellerinformation, eine Feldgerät-Softwareversion, eine Feldgerät-Hardwareversion, einen Feldgeräte-Standort und/oder einen zeitlichen Verlauf einer Feldgerät-Eigenschaft und/oder einen zeitlichen Verlauf von Feldgerät-Verwaltungsaktionen umfasst.

8. Verfahren nach Anspruch 6 oder 7,
   **dadurch gekennzeichnet,**
   **dass** die Erfassungsparameter des Feldgeräts eine Umgebungstemperatur, einen Umgebungsluftdruck, eine Umgebungsluftfeuchtigkeit, einen Umgebungsschallpegel, eine Umgebungshelligkeit, eine Umgebungsluftzusammensetzung, einen Parameter einer Produktionsmaschine und/oder einen zeitlichen Verlauf eines Erfassungsparameters umfasst.

9. Verfahren nach einem der Ansprüche 6 bis 8,
   **dadurch gekennzeichnet,**
   **dass** die Eigenschaft der Kommunikationsverbindung eine Routing-Information, ein Kommunikationsprotokoll, eine kryptografische Information und/oder einen zeitlichen Verlauf der Eigenschaft der Kommunikationsverbindung umfasst.

10. Verfahren nach einem der Ansprüche 1 bis 9,
    **dadurch gekennzeichnet,**
    **dass** die Zuordnungsinformation (I1,...,In) und/oder die Mandantenzuordnung (Z) kryptografisch geschützt gespeichert (S1) ist und/oder kryptografisch geschützt übermittelt (S2) wird und/oder kryptographisch geschützt verifiziert wird.

11. Verfahren nach einem der Ansprüche 1 bis 10,
    **dadurch gekennzeichnet,**
    **dass** die Feldgerät-Daten (D1,...,Dn) kryptographisch geschützt an das Backend (100) übermittelt (S2) werden.

12. Verfahren nach einem der Ansprüche 1 bis 11,
    **dadurch gekennzeichnet,**
    **dass** die Zuordnungsinformation (I1,...,In) ferner eine Mandanteneigenschaft umfasst.

13. Computerprogrammprodukt, welches die Durchführung des Verfahrens nach einem der Ansprüche 1 bis 12 auf einer programmgesteuerten Einrichtung veranlasst.

14. Vorrichtung (P) zum Überprüfen einer in einem Backend (100) für eine Mehrzahl N von Mandanten (T1,...,TN) verwalteten Mandantenzuordnung (Z) umfassend eine Zuordnungsinformation (I1,...,In) von in einem Automatisierungssystem (AS1, AS2) angeordneten Feldgeräten (FD1,...,FDn), wobei ein jedes der Feldgeräte (FD1,...,FDn) einem der N Mandanten (T1,...,TN) zugeordnet ist und mittels des Backends (100) von dem zugeordneten Mandanten (T1,...,TN) verwaltbar ist, mit:

> einer Speichereinheit (M) zum Speichern der Zuordnungsinformation (I1,...,In), wobei die Zuordnungsinformation (I1,...,In) die Zuordnung eines jeweiligen Feldgeräts (FD1,...,FDn) zu dem Mandanten (T1,...,TN) umfasst,
> einer Empfangseinheit (R) zum Empfangen von von den Feldgeräten (FD1,...,FDn) bereitgestellten Feldgerät-Daten (D1,...,Dn), und
> einer Überprüfungseinheit (P) zum Überprüfen der in der Speichereinheit (M) gespeicherten Zuordnungsinformation (I1,...,In) in Abhängigkeit der empfangenen Feldgerät-Daten (D1,...,Dn).

15. Backend (100) mit einer Vorrichtung (P) nach Anspruch 14 zum Überprüfen einer in dem Backend (100) verwalteten Mandantenzuordnung (Z) umfassend eine Zuordnungsinformation (I1,...,In) von in einem Automatisierungssystem (AS1, AS2) angeordneten Feldgeräten (FD1,...,FDn).

FIG 1

FIG 2

Z — | I1•••In |

P — ○

100

M — | D1•••Dn |

R — | |

LAN

WLAN

AS1

G

FD1    FD2    FD3    FD4

# FIG 3A

## FIG 3B

| FD# | D# (loc) | T# |
|-----|----------|-----|
| FD1 | GER | T1 |
| FD2 | GER | T1 |
| FD3 | GER | T3 |
| FD4 | GER | T1 |
| FD5 | GER | T1 |
| FD6 | FRA | T1 |
| FD7 | FRA | T2 |
| FD8 | FRA | T3 |
| FD9 | FRA | T2 |
| FD10 | GB | T1 |
| FD11 | GB | T3 |

## FIG 4

**Europäisches Patentamt**
**European Patent Office**
**Office européen des brevets**

# EUROPÄISCHER RECHERCHENBERICHT

Nummer der Anmeldung

EP 16 20 5729

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2013/211559 A1 (LAWSON DOUGLAS C [US] ET AL) 15. August 2013 (2013-08-15) * Absatz [0007] - Absatz [0011] * * Absatz [0030] - Absatz [0094] * ----- | 1-15 | INV. G05B19/418 G05B23/02 G05B19/042 |
| X | DE 10 2012 109348 A1 (ENDRESS & HAUSER PROCESS SOLUT [CH]) 3. April 2014 (2014-04-03) * Absatz [0006] - Absatz [0026] * ----- | 1-15 | |
| X | EP 1 710 647 A2 (ABB PATENT GMBH [DE]) 11. Oktober 2006 (2006-10-11) * Absatz [0008] - Absatz [0034] * ----- | 1-15 | |
| X | DE 10 2008 010864 A1 (ENDRESS & HAUSER PROCESS SOLUT [CH]) 27. August 2009 (2009-08-27) * Absatz [0010] - Absatz [0050] * ----- | 1-15 | |
| X | DE 10 2010 029953 A1 (ENDRESS & HAUSER PROCESS SOLUT [CH]) 15. Dezember 2011 (2011-12-15) * Absatz [0008] - Absatz [0029] * ----- | 1-15 | RECHERCHIERTE SACHGEBIETE (IPC) G05B |
| X | DE 11 2014 004467 T5 (FISHER-ROSEMOUNT SYSTEMS INC [US]) 4. August 2016 (2016-08-04) * das ganze Dokument * ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 1. Juni 2017 | Patsiopoulos, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 20 5729

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-06-2017

| Im Recherchenbericht angeführtes Patentdokument | Datum der Veröffentlichung | Mitglied(er) der Patentfamilie | Datum der Veröffentlichung |
|---|---|---|---|
| US 2013211559 A1 | 15-08-2013 | US 2013211559 A1<br>US 2013211870 A1<br>US 2013212214 A1<br>US 2017019317 A1 | 15-08-2013<br>15-08-2013<br>15-08-2013<br>19-01-2017 |
| DE 102012109348 A1 | 03-04-2014 | KEINE | |
| EP 1710647 A2 | 11-10-2006 | DE 102005016542 A1<br>EP 1710647 A2 | 12-10-2006<br>11-10-2006 |
| DE 102008010864 A1 | 27-08-2009 | DE 102008010864 A1<br>EP 2247987 A1<br>US 2011004685 A1<br>WO 2009106414 A1 | 27-08-2009<br>10-11-2010<br>06-01-2011<br>03-09-2009 |
| DE 102010029953 A1 | 15-12-2011 | DE 102010029953 A1<br>WO 2011154212 A1 | 15-12-2011<br>15-12-2011 |
| DE 112014004467 T5 | 04-08-2016 | CN 105593773 A<br>DE 112014004467 T5<br>GB 2536810 A<br>JP 2016541037 A<br>US 2015095788 A1<br>WO 2015048384 A1 | 18-05-2016<br>04-08-2016<br>28-09-2016<br>28-12-2016<br>02-04-2015<br>02-04-2015 |

EPO FORM P0461

Für nähere Einzelheiten zu diesem Anhang : siehe Amtsblatt des Europäischen Patentamts, Nr.12/82